# EUROPEAN PATENT SPECIFICATION

(11) **EP 1 827 036 B1**
(45) Date of publication and mention of the grant of the patent: **14.04.2010**
(21) Application number: 07250658.7
(22) Date of filing: 16.02.2007
(51) Int. Cl.: H04J 3/06

(54) **Interface apparatus for connecting master base station with radio remote unit**
Schnittstellenvorrichtung zur Verbindung einer Basisstation mit einer entfernten Funkeinheit
Dispositif d'interface permettant de connecter une station de base avec une unité radio à distance

(30) Priority: 22.02.2006 CN 200610057625
(43) Date of publication of application: 29.08.2007
(73) Proprietor: Huawei Technologies Co., Ltd., Longgang District Shenzhen Guangdong 518129 (CN)
(72) Inventor: Lan, Peng, Huawei Administration Building, 518129 Guangdong (CN); Pu, Tao, Huawei Administration Building, 518129 Guangdong (CN); Wu, Wangjun, Huawei Administration Building, 518129 Guangdong (CN)
(74) Representative: Kreuz, Georg Maria

(56) References cited:
- EP-A- 1 085 773
- US-A1- 2004 004 943
- US-B1- 6 703 875

## Description

### Field

The present invention relates to distributed base station, and more particularly, to an interface apparatus for connecting a master base station with a Radio Remote Unit (RRU) in the distributed base station.

### Background

In wireless base station systems, a Radio Access Network (RAN) provides users with a radio access function. The master base station and a radio module, such as an RRU, can form various networking modes, for example: a star networking mode, a chain networking mode, a tree networking mode, and etc.

An example of a RRU is an outdoor RRU developed in accordance with a Frequency Division Duplex (FDD) protocol of Third Generation Partnership Projects Release 99/Release 4 (3GPP R99/R4). Generally speaking, the physical architecture of RRU is an integrated structure, which meets various installation demands. The small-size outdoor RRU meets the requirement on installation near the antenna so as to reduce the demands for selection of the equipment room. An example of the master base station includes an indoor macro base station, an outdoor macro base station, an indoor BaseBand Unit (BBU), and an outdoor BBU.

US 2004/0004943 A1 discloses a base station system for mobile communications between a mobile terminal and a base station controller, the base station system utilizing a digital modem unit for receiving a signal to be transmitted to the mobile terminal from the base station controller, framing the received signal according to a frame format for transmission different than an Ethernet specified data format, the frame format being a predetermined remote RF (radio frequency) unit frame, the digital modem unit transmitting a plurality of the remote RF frames in series over an Ethernet using twisted pair cable, at least one remote RF unit hub receiving the remote RF unit frames transmitted by the digital modem unit and distributing the received RF unit frames to a plurality of remote RF units via the Ethernet using twisted pair cable, and the plurality of remote RF units producing a deframed signal by deframing the remote RF unit frames received from the remote RF hub, modulating the deframed signal to the mobile terminal, wherein the remote RF unit frames are divided into a traffic frame for use in transmitting traffic data, which is transmitted and received by the mobile terminal and a control frame for use in transmitting a control address and control data, the control address differentiating the plurality of remote RF units from one another, the control data containing a command to control operation and functions of the plurality of remote RF units.

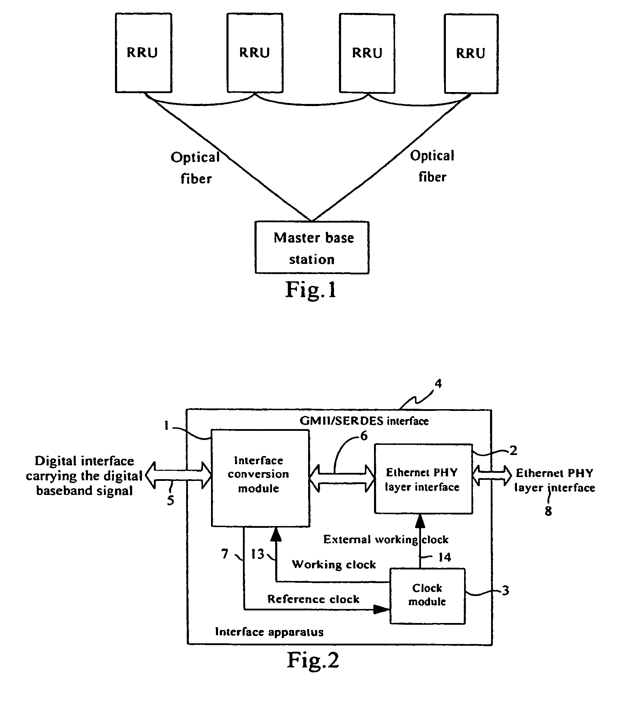

At present, the RRU is generally connected with the master base station through an optical interface, and shares the resources of baseband processing and master control clock of the master base station. Figure 1 is a schematic diagram illustrating the connecting of a remote RRU using the optical fiber in the prior art. As shown in Figure 1, the master base station is connected with the RRU using the optical fiber through the optical interface, to implement the transmission of the baseband data between the master base station and the RRU.

In the implementation solution of connecting an RRU using the optical fiber as shown in Figure 1, the laying cost for short distance transmission is high and the construction difficulty thereof is great. In addition, in order to connect the RRU using the optical fiber, an optical module has to be added in the master base station and the RRU, which increases the equipment cost, and reduces equipment reliability. The laying in the buildings, however, is typically implemented by the twisted-pair lines, particularly the unshielded twisted-pair lines; if the optical fiber is required to be used, connection has to be set up again, which is not in favor of using the existing connection resources, thereby increasing the cost of construction.

### Summary

In view of the above, an interface apparatus for connecting a master base station with a Radio Remote Unit (RRU) is provided, so as to reduce the cost of construction, improve the reliability of equipment and guarantee the clock synchronization between the RRU and the master base station.

The specific solution in accordance with one or more embodiments of the present invention is as follows.

An interface apparatus for communicating over an Ethernet PHY layer between a first communications apparatus, such as a master base station, with a second communications apparatus such as a Radio Remote Unit (RRU), includes: an interface conversion module, an Ethernet PHY layer interface, and a clock module.

The interface conversion module is configured to receive a digital baseband signal from a Common Public Radio Interface (CPRI) carrying the digital baseband signal and convert the digital baseband signal into a signal conforming with a format of the communications medium, such as an Ethernet physical (PHY) layer interface protocol.

The Ethernet PHY layer interface is configured to receive the converted digital baseband signal from the interface conversion module, send the converted digital baseband signal to a peer end Ethernet PHY layer interface, receive another converted digital baseband signal from the peer end Ethernet PHY layer interface, extract a clock signal from the another converted digital baseband signal, and send the clock signal to the interface conversion module.

The interface conversion module (21) is further configured to receive the clock signal from the Ethernet PHY layer interface (8), and acquire a reference clock (27) by dividing frequency of the clock signal.

The clock module is configured to receive the reference clock from the interface conversion module, generate a working clock and an external working clock, and provide the working clock and the external working clock for the interface conversion module and the Ethernet PHY layer interface, respectively.

The external working clock is generated after a frequency division processing of the working clock; and the Ethernet PHY layer interface performs a frequency multiplication of the external working clock.

The first communications apparatus is a master base station, the second communications apparatus is a Radio Remote Unit, RRU, or a cascaded device; the interface apparatus is set in the RRU or the cascaded device.

Said first communications apparatus and said second communications apparatus work synchronously.

The clock module includes:
a Phase Locked Loop (PLL), a Voltage-Controlled Crystal Oscillator (VCXO) and a frequency division circuit;
a locked circuit constituted by the PLL and the VCXO operative to process the reference clock to restore and generate the working clock;
the PLL is operative to receive the reference clock and send the generated working clock to the frequency division circuit;
the frequency division circuit is operative to generate the external working clock.

Optionally, the clock module includes:
a PLL, a Voltage-Controlled Oscillator (VCO) and the frequency division circuit;
a locked circuit constituted by the PLL and the VCO operative to process the reference clock to restore and generate the working clock; and wherein
the PLL is operative to receiving the reference clock and send the generated working clock to the frequency division circuit; and
the frequency division circuit is operative to generate the external working clock.

The Ethernet PHY layer interface includes a gigabit Ethernet PHY layer interface chip ;
the frequency conversion includes an eight-frequency division;
the frequency division circuit includes a five-frequency division circuit.

In an embodiment,
the Ethernet PHY layer interface of an interface apparatus of the second communications apparatus works in a slave clock mode, the interface conversion module of the RRU interface apparatus receives the clock signal from the Ethernet PHY layer and acquires the reference clock after converting the clock frequency, the Ethernet PHY layer of the interface apparatus extracts a clock signal from the peer end Ethernet PHY layer interface, and sends the clock signal to the interface conversion module of the RRU interface apparatus.

The Ethernet PHY layer interfaces are connected by a shielded or an unshielded twisted-pair line.

The interface for carrying the digital baseband signal includes a high speed interface or other user-defined interfaces; and
the high speed interface includes a Common Public Radio Interface (CPRI).

The interface conversion module includes:
a high speed serial serialised-deserialised (SERDES) interface, or a synchronous parallel interface, which is connected with the interface carrying the digital baseband signal, and a Gigabit Media Independent Interface (GMII) series or a SERDES series interface, which is connected with the Ethernet PHY layer interface.

The GMII series interface includes: a GMII, a Reduction GMII (RGMII) or a Reduction Ten Bit Interface (RTBI); and the SERDES series interface includes a 1.25G SERDES interface.

The Ethernet PHY layer interface is a hundred-megabit or a gigabit Ethernet PHY layer chip.

The interface apparatus is used in a cascaded device for cascading the master base station with the RRU in the networking.

In another embodiment of the present invention, an interface apparatus for communications between a first communications apparatus and a second communications apparatus is provided, and the interface apparatus includes:
an interface conversion module in the interface apparatus, configured to receive a digital baseband signal from a Common Public Radio interface (CPRI) carrying the digital baseband signal, convert the digital baseband signal into a signal conforming with a format of an Ethernet PHY layer, extract a reference clock from the digital baseband signal of the CPRI carrying the digital baseband signal;
an Ethernet PHY layer interface in the interface apparatus, configured to receive the converted digital baseband signal from the interface conversion module and send the converted digital baseband signal to a peer end Ethernet PHY layer interface;
the clock module in the interface apparatus, configured to receive the reference clock from the interface conversion module, generate a working clock and an external working clock, and provide the working clock and the external working clock for the interface conversion module and the Ethernet PHY layer interface, respectively.

The external working clock is generated after a frequency division processing of the working clock; the Ethernet PHY layer interface performs a frequency multiplication of the external working clock.

The first communications apparatus is a master base station, the second communications apparatus is a Radio Remote Unit, RRU, or a cascaded device; the interface apparatus is set in the master base station.

The Ethernet PHY layer interface of the interface apparatus of the first communications apparatus works in a master clock mode, the interface conversion module of the interface apparatus of the first communications apparatus restores the reference clock from the digital baseband signal of the CPRI carrying the digital baseband signal.

In another embodiment as master base station contains an interface apparatus, the interface apparatus including:
an interface conversion module for receiving a digital baseband signal from a digital interface carrying the digital baseband signal and converting the digital baseband signal into a signal conforming with a format of an Ethernet physical (PHY) layer interface protocol; restoring a reference clock and sending the acquired reference clock to a clock module;
an Ethernet PHY layer interface for receiving the converted digital baseband signal from the interface conversion module and sending the converted digital baseband signal to a peer end Ethernet PHY layer interface.;
; the clock module for receiving the reference clock from the interface conversion module, generating a working clock and an external working clock, and providing the working clock and the external working clock for the interface conversion module and the Ethernet PHY layer interface, respectively.

The Ethernet PHY layer interface of the interface apparatus of the master base station works in a master clock mode, the interface conversion module of the interface apparatus of the master base station restores the reference clock, the Ethernet PHY layer interface of the interface apparatus of the master base station receives the digital baseband signal converted by the interface conversion module and sends the digital baseband signal to the peer end Ethernet PHY layer interface.

In another embodiment a Radio Remote Unit (RRU) containing an interface apparatus, the interface apparatus includes:
an interface conversion module for receiving a digital baseband signal from a digital interface carrying the digital baseband signal and converting the digital baseband signal into a signal conforming with a format of an Ethernet physical (PHY) layer interface protocol; restoring a reference clock and sending the acquired reference clock to a clock module;
an Ethernet PHY layer interface for receiving the converted digital baseband signal from the interface conversion module and sending the converted digital baseband signal to a peer end Ethernet PHY layer interface;the clock module for receiving the reference clock from the interface conversion module, generating a working clock and an external working clock, and providing the working clock and the external working clock for the interface conversion module and the Ethernet PHY layer interface, respectively.

The Ethernet PHY layer interface of an RRU interface apparatus works in a slave clock mode.

In another embodiment a cascaded device containing an interface apparatus, the interface apparatus includes:
an interface conversion module for receiving a digital baseband signal from a digital interface carrying the digital baseband signal and converting the digital baseband signal into a signal conforming with a format of an Ethernet physical (PHY) layer interface protocol; restoring a reference clock and sending the acquired reference clock to a clock module;
at least one Ethernet PHY layer interface for receiving the converted digital baseband signal from the interface conversion module and sending the converted digital baseband signal to a peer end Ethernet PHY layer interface; the clock module for receiving the reference clock from the interface conversion module, generating a working clock and an external working clock, and providing the working clock and the external working clock for the interface conversion module and the Ethernet PHY layer interface, respectively.

It can be seen from the above that the interface apparatus of the embodiments of the present invention implements the long distance transmission of the digital baseband signal between the master base station and the RRU using the twisted-pair line, particularly the unshielded twisted-pair line, through the interface conversion module and the Ethernet PHY layer interface. The interface conversion module is used for converting the protocol format between the digital interface, for example a high speed interface for carrying the digital baseband signal and the Ethernet PHY layer interface, for example the GMII, the RGMII, the RTBI or the 1.25G SERDES interface; at the same time, the Ethernet PHY layer interface in the interface apparatus of the master base station is set to work in the master clock mode, and the Ethernet PHY layer interface in the interface apparatus of the RRU is set to work in the slave clock mode. The interface apparatus of the embodiments of the present invention makes the working clock of the RRU module synchronize with that of the master base station, thereby guaranteeing the synchronous transmission between the RRU and the master base station.

### Brief Description of the Drawings

Figure 1 is a schematic diagram illustrating the connecting of an RRU using the optical fiber in the prior art.
Figure 2 is a schematic diagram illustrating the constitution of an interface apparatus in accordance with an embodiment of the present invention.
Figure 3 is a schematic diagram illustrating the constitution of a clock module in the interface apparatus in accordance with an embodiment of the present invention.
Figure 4 is a schematic diagram illustrating the connecting of an RRU using the twisted-pair line in accordance with an embodiment of the present invention.
Figure 5 is a schematic diagram illustrating the connecting of an RRU using the twisted-pair line in accordance with an embodiment of the present invention.

### Embodiments

According to an embodiment of the invention, the interface apparatus 4 includes an interface conversion module, an Ethernet physical (PHY) layer interface and a clock module. The interface conversion module is used for converting the protocol format between the digital interface for carrying a digital baseband signal and the Ethernet PHY layer interface. The clock module receives a reference clock from the interface conversion module, generates a working clock and an external working clock, and sends the working clock as well as the external working clock to the interface conversion module and the Ethernet PHY layer interface, respectively, and long distance synchronous transmission of the digital signals is implemented between the baseband unit and the RRU through the Ethernet PHY layer interface.

Embodiments of the present invention are hereinafter described in detail, by way of nonlimiting example, with reference to the accompanying drawings.

Figure 2 is a schematic diagram illustrating the constitution of the interface apparatus in accordance with an embodiment of the present invention. The interface apparatus is incorporated in both the master base station and the RRU, and is connected with the digital interface which is configured in the master base station and the RRU respectively and used for carrying the digital baseband signal. The synchronous transmission of the digital baseband signals is implemented between the master base station and the RRU using the interface apparatus. As shown in Figure 2, the interface apparatus includes the following components.
(1) An interface conversion module, which is used for converting the protocol format between the digital interface, for example, a high speed interface such as a Common Public Radio Interface (CPRI) or other interfaces used for carrying the digital baseband signal and the Ethernet PHY layer interface 2, i.e. converting the digital baseband signal from the digital interface 5 carrying the digital baseband signal into a signal in the protocol format of the Ethernet PHY layer interface 2; sending the converted digital baseband signal 6 to the Ethernet PHY layer interface 2; restoring a reference clock in the digital baseband signal from the digital interface used for carrying the digital baseband signal, or receiving a clock signal from the Ethernet PHY layer 2 and acquiring a reference clock by dividing frequency of the received clock signal, and sending the acquired reference clock 7 to the clock module 3. The interface conversion module provides a SERDES interface or a synchronous parallel interface for the high speed interface of the master base station or the RRU, and provides a GMII/SERDES series interface for the Ethernet PHY layer interface 2. The GMII series interface includes a Gigabit Media Independent Interface (GMII)/ Reduced Gigabit Media Independent Interface (RGMII)/ Reduced ten bits interface (RTBI) series interface, and the SERDES series interface may be a 1.25G SERDES interface. It should be noted that, when a SERDES interface is provided by the digital interface which is towards the master base station and is used for carrying the digital baseband signal, and a SERDES interface is provided by the Ethernet PHY layer interface 2, the interface towards the master base station is a SERDES interface that conforms with the CPRI protocol and the interface towards the Ethernet PHY layer is a SERDES interface that conforms with the Ethernet protocol. Because the two protocols are different, the protocol formats need to be converted by the interface conversion module as well.
(2) An Ethernet PHY layer interface, which is used for connecting the master base station with the RRU, implementing the long distance transmission of the digital baseband signal between the master base station and the RRU using a CAT5/5E/6 class twisted-pair line. At the side of the master base station, the Ethernet PHY layer interface 2 receives the digital baseband signal 6 converted by the interface conversion module 1 and sends the converted digital baseband signal to the peer end Ethernet PHY layer interface; the Ethernet PHY layer interface 8 of the RRU receives the converted digital baseband signal from the Ethernet PHY layer interface of the peer end and extracts a clock signal, then sends the clock signal to the interface conversion module.
   The Ethernet PHY layer interface 2 can be an existing hundred-megabit or a gigabit Ethernet PHY layer chip. The Ethernet PHY layer chip connects the GMII/RGMII/RTBI or the 1.25G SERDES interface with the interface conversion module 1.
   For example, the gigabit Ethernet PHY layer chip can transmit the gigabit data for a distance of at least 100 meters through the CAT5/5E/6 class twisted-pair line using the technique such as a Pulse Amplitude Modulation-5 (PAM-5) coding. At the side of the master base station, the gigabit Ethernet PHY layer chip can be set as working immovably in a gigabit mode, and transmits the digital baseband signal from the interface conversion module to the RRU 100 meters away; the RRU receives the digital baseband signal from the master base station using the Ethernet PHY layer chip in the interface apparatus thereof, and sends the digital baseband signal converted by the interface conversion module to the CPRI of the RRU.
   The long distance transmission of the baseband data between the master base station and the RRU is implemented through the twisted-pair line, particularly the unshielded twisted-pair line, by using the above mentioned Ethernet PHY layer interface and the interface conversion module.
(3) A clock module, which is used for guaranteeing the synchronous work between the master base station and the RRU.

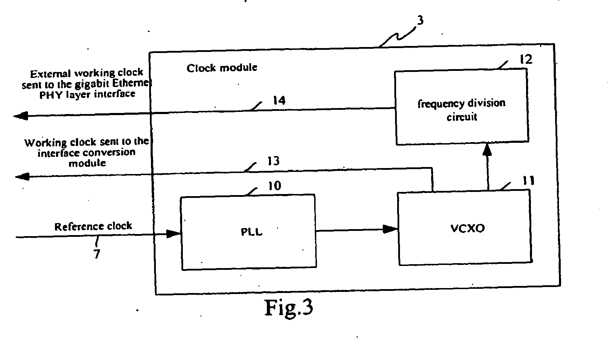

In common applications, the clocks of the entities connected with each other by the Ethernet PHY layer chip are non-synchronous, in a system which includes the master base station and the RRU, however, synchronization needs to be guaranteed between the RRU and the master base station. The clock module shown in Figure 3 is used to implement the function of guaranteeing the synchronization between the master base station and the RRU which are connected with each other by the Ethernet PHY layer chip.

Figure 3 is a schematic diagram illustrating the constitution of the clock module of the interface apparatus in accordance with an embodiment of the present invention. As shown in Figure 3, the clock module includes a Phase Locked Loop (PLL) 10, a Voltage-Controlled Crystal Oscillator (VCXO) 11 and an frequency division circuit 12. X indicates a numerical value, which is determined in accordance with the actual application, for example a five-frequency division and the like. At the side of the master base station, the PLL receives the reference clock 7 restored from the digital baseband signal of the digital interface carrying the digital baseband signal, and the restoration is implemented by the interface conversion module. After performing a PLL+VCXO locked circuit restoring clock processing of the reference clock, the PLL generates a working clock 13 and provides the working clock 13 for the interface conversion module; then generates an external working clock 14 after the frequency division processing of the generated working clock, and provides the external working clock 14 for the Ethernet PHY layer interface 2, such as a gigabit Ethernet interface chip. Supposing that the internal PLL of the gigabit Ethernet PHY layer interface chip performs a five-frequency multiplication of the external working clock 14, the gigabit Ethernet PHY layer interface chip will work with the frequency of 122.88M Hz. As the PLL+VCXO processing and the frequency division processing are common knowledge of those skilled in the art, the implementing process will not be described here while emphasis is given to the clock module 3 of the interface apparatus 4 in accordance with an embodiment of the present invention which guarantees that the master base station and the RRU work synchronously and form a synchronous system. It should be noted that, the VCXO 11 in the embodiment can be replaced by a Voltage-Controlled Oscillator (VCO) so as to constitute the clock module 3 of the interface apparatus 4.

The clock of the Ethernet PHY layer interface 2 needs to work in a Loop Time mode when the Ethernet PHY layer interfaces (1000BASE-T) are connected with each other, according to demands of Institution of Electrical and Electronics Engineers 802.3 (IEEE 802.3) protocol. The Loop Time mode means that the Ethernet PHY layer interface of one communication side works in a Master clock mode with interfaces of the line side of the Ethernet PHY layer chip all adopting a local clock when receiving and sending data, while the Ethernet PHY layer interface of the other communication side works in a Slave clock mode with the interfaces of the line side of the Ethernet PHY layer chip all adopting a circuit restoring clock when receiving and sending data. In the connection of the system including the master base station and the RRU, the synchronous work between the master base station and the RRU is implemented by setting the Ethernet PHY layer interface 2 of the interface apparatus 4 of the master base station in the master clock mode and the Ethernet PHY layer interface 2 of the interface apparatus 4 of the RRU in the slave clock mode as well as by configuring the clock module 3 as shown in Figure 3. The working mode of the clock can be determined by setting hardware or a software.

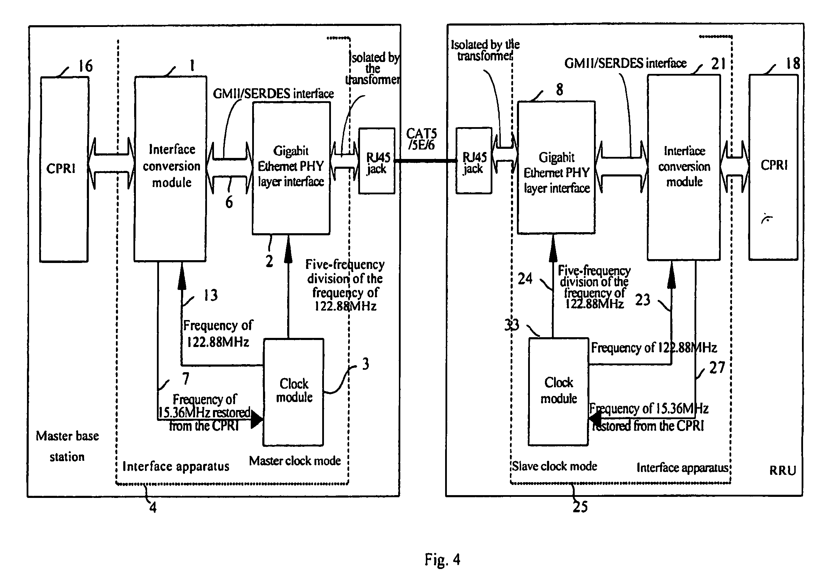

Figure 4 is a schematic diagram illustrating connecting the master base station with the RRU using the twisted-pair line in accordance with an embodiment of the present invention. Supposing it is configured by software that the Ethernet PHY layer interface of the interface apparatus of the master base station works in the master clock mode and the Ethernet PHY layer interface of the interface apparatus of the RRU works in the slave clock mode. Supposing that frequency of the reference clock 7 restored from the CPRI by the interface conversion module is 15.36MHz and the internal PLL 10 of the Ethernet PHY layer interface 2 performs a quintuple processing, then the frequency division 12 of the interface apparatus 4 is the five-frequency division; and the master base station is connected with the RRU through an RJ45 interface by the CAT5/5E/6 class twisted-pair line.

In this way, the interface conversion module 1 of the interface apparatus 4 in the master base station converts the protocol format of the digital baseband signal from the CPRI 16, and transmits the signal to the outside of the master base station through the Ethernet PHY layer interface 2 by the twisted-pair line connected by the RJ45 interface. In the master base station, the PLL of the clock module 3 receives the reference clock 7, i.e. the frequency of 15.36MHz, restored from the CPRI 16 by the interface conversion module, performs the PLL+VCXO locked circuit restoring clock processing of the frequency of 15.36MHz to generate a working clock 13, i.e. the frequency of 122.88MHz, and sends the working clock 13 to the interface conversion module; then generates an external working clock 14 after the five-frequency division processing of the generated frequency of 122.88MHz, and sends the external working clock 14 to the Ethernet PHY layer interface 2; and the internal PLL of the Ethernet PHY layer interface 2 restores the frequency of 122.88MHz after the five-frequency multiplication processing of the synchronous clock. The interface conversion module 1 and the Ethernet PHY layer interface 2 of the master base station both work in the frequency of 122.88MHz, i.e. in the synchronous working state, by using the interface apparatus 4.

In the RRU, the digital baseband signal of the master base station is received by the Ethernet PHY layer interface 8 and the twisted-pair line connected via the RJ45 interface. The interface conversion module 1 of the interface apparatus 24 converts the protocol format of the digital baseband signal from the Ethernet PHY layer interface 8 and sends the converted digital baseband signal to the CPRI 18. In the RRU, the Ethernet PHY layer interface extracts the frequency of 122.88MHz synchronized with the master base station from the received digital baseband signal and sends the clock to the interface conversion module 21 to perform an eight-frequency division processing, and the interface conversion module generates the frequency of 15.36MHz synchronously used by the PLL. The PLL of the clock module 33 receives the frequency of 15.36MHz from the interface conversion module and performs the PLL+VCXO lock processing of the frequency of 15.36MHz to generate a working clock 24, i.e. the frequency of 122.88MHz, and sends the working clock 24 to the interface conversion module 21; then performs the five-frequency division processing of the generated frequency of 122.88MHz and sends the generated frequency of 24.576MHz to the Ethernet PHY layer interface 8 as the working clock 24 thereof, and the internal PLL of the Ethernet PHY layer interface 8 performs the five-frequency multiplication processing of the synchronous clock to restore the frequency of 122.88MHz. The interface conversion module 21 and the Ethernet PHY layer interface 8 of the RRU both work in the frequency of 122.88MHz, i.e. in the synchronous working state, by using the interface apparatus. As the frequency of 122.88MHz of the RRU and the frequency of 122.88MHz of the master base station are synchronous, the whole system is in the synchronous working state.

It can be seen from the above principle that the master base station and the RRU that are connected by the Ethernet PHY layer interface 2/8 of the interface apparatus 4/24 in accordance with embodiments of the present invention are in the synchronous working state, which implements the long distance transmission of the baseband data between the master base station and the RRU by the twisted-pair line, particularly the unshielded twisted-pair line.

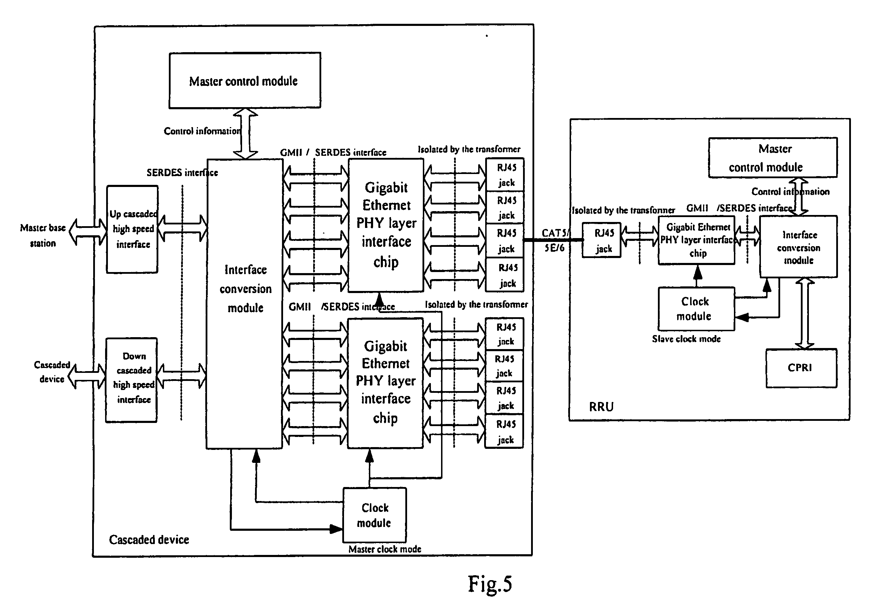

Figure 5 is a schematic diagram illustrating the connecting of an RRU using the twisted-pair line in accordance with an embodiment of the present invention. As shown in Figure 5, when a network between the master base station and the RRU is constructed by a cascaded device, such as a Remote HUB (RHUB), the interface apparatus can be set in the cascaded device for cascading the master base station and the RRU in the network. The networking implementation between the master base station and the RRU through the cascaded device is unrelated with the embodiment of the present invention, and no further description is given here. Embodiments of the present invention regard the cascaded device as part of the master base station. The interface conversion module of the cascaded device can connect multiple gigabit Ethernet PHY layer interface chips, e.g. two chips as shown in Figure 5. Each gigabit Ethernet PHY layer interface chip can provide multiple interfaces, by which the chip is connected with multiple RRUs to implement the star networking. As shown in Figure 5, each gigabit Ethernet PHY layer interface chip provides four interfaces, and each interface corresponds to an RJ45 interface; the gigabit Ethernet PHY layer interface is isolated from the RJ45 interface by the transformer; the interface conversion module works under the control of the master control module, and the clock module provides the external working clock for the two gigabit Ethernet PHY layer interfaces at the same time. At the side of the RRU, the interface conversion module works under the control of the master control module. The long distance transmission between the cascaded device and the RRU is implemented by the twisted-pair line, of which the working principle is shown in Figure 4, and the synchronous work is maintained between the cascaded device and the RRU.

The foregoing descriptions are only preferred embodiments of the present invention and are not used for limiting the protection scope thereof.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as any suitable type of code, such as source code, object code, compiled code, interpreted code, executable code, static code, dynamic code, and the like. The instructions may be implemented using any suitable high-level, low-level, object-oriented, visual, compiled and/or interpreted programming language, such as C, C++, Java, BASIC, Perl, Matlab, Pascal, Visual BASIC, JAVA, ActiveX, assembly language, machine code, and so forth. The embodiments are not limited in this context. The skilled person would readily understand that the term computer in its most general sense encompasses programmable devices such as referred to above, and data processing apparatus and computer systems.

Suitably, the computer program is stored on a carrier medium in machine or device readable form, for example, using any computer-readable media, machine-readable media, or article capable of storing software. The media or article may include any suitable type of memory unit, memory device, memory article, memory medium, storage device, storage article, storage medium and/or storage unit. The media or article may comprise memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewritable (CD-RW), optical disk, magnetic media, magneto-optical media, removable memory cards or disks, various types of Digital Versatile Disk (DVD), subscriber identify module, tape, cassette, or the like. The computer program may be supplied from a remote source embodied in a communications medium such as an electronic signal, radio frequency carrier wave or optical carrier wave. Such carrier media are also envisaged as aspects of the present invention.

Unless specifically stated otherwise, it may be appreciated that terms such as "processing", "computing", "calculating", "determining", or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

In view of the foregoing description it will be evident to a person skilled in the art that various modifications may be made within the scope of the invention.

## Claims

1. An interface apparatus (25) for communications between a first communications apparatus and a second communications apparatus, said interface apparatus comprising:
an interface conversion module (21), configured to receive a digital baseband signal from a Common Public Radio Interface, CPRI, (18) carrying the digital baseband signal and convert the digital baseband signal into a signal conforming with a format of an Ethernet Physical, PHY, layer;
an Ethernet PHY layer interface (8), configured to receive the converted digital baseband signal from the interface conversion module (21), send the converted digital baseband signal to a peer end Ethernet PHY layer interface (2), receive another converted digital baseband signal from the peer end Ethernet PHY layer interface (2), extract a clock signal from the another converted digital baseband signal and send the clock signal to the interface conversion module (21);
wherein the interface conversion module (21) is further configured to receive the clock signal from the Ethernet PHY layer interface (8), and acquire a reference clock (27) by dividing frequency of the clock signal;
a clock module (33), configured to receive the reference clock (27) from the interface conversion module (21), generate a working clock (23) and an external working clock (24), and provide the working clock (23) and the external working clock (24) for the interface conversion module (21) and the Ethernet PHY layer interface (8), respectively;
wherein the external working clock is generated after a frequency division processing of the working clock; and
wherein the Ethernet PHY layer interface performs a frequency multiplication of the external working clock;
wherein the first communications apparatus is a master base station, the second communications apparatus is a Radio Remote Unit, RRU, or a cascaded device between the master base station and the RRV; and wherein
the interface apparatus is set in the RRU or the cascaded device.

2. An interface apparatus according to claim 1, wherein said first communications apparatus and said second communications apparatus work synchronously.

3. The interface apparatus according to Claim 1, wherein the clock module (33) comprises:
a Phase Locked Loop, PLL (10), a Voltage-Controlled Crystal Oscillator, VCXO (11), and a frequency division circuit (12);
a locked circuit constituted by the PLL (10) and the VCXO (11) operative to process the reference clock (7, 27) to restore and generate the working clock (13, 23); and wherein
the PLL (10) is operative to receive the reference clock (7, 27) and sending the generated working clock (13, 23) to the frequency division circuit (12); and
the frequency division circuit (12) is operative to generate the external working clock (14, 24).

4. The interface apparatus according to Claim 1, wherein the clock module (3, 33) comprises:
the PLL (10), a Voltage-Controlled Oscillator, VCO, and the frequency division circuit (12);
a locked circuit constituted by the PLL (10) and the VCO operative to process the reference clock (7, 27) to restore and generate the working clock (13, 23); and wherein
the PLL (10) is operative to receive the reference clock (7, 27) and sending the generated working clock (13, 23) to the frequency division circuit (12); and
the frequency division circuit (12) is operative to generate the external working clock (14, 24).

5. The interface apparatus according to Claim 3 or 4, wherein
the Ethernet PHY layer interface comprises a gigabit Ethernet PHY layer interface chip ;
the frequency conversion comprises an eight-frequency division;
the frequency division circuit (12) comprises a five-frequency division circuit.

6. The interface apparatus according to any one of Claims 1 to 5, wherein the Ethernet PHY layer interfaces (2,8) are connected by a shielded or an unshielded twisted-pair line.

7. The interface apparatus according to any one of claims 1 to 6, wherein the interface for carrying the digital baseband signal comprises a high speed interface or other user-defined interfaces.

8. The interface apparatus according to any one of Claims 1 to 7, wherein the interface conversion module (21) comprises:
a high speed serial SERDES interface, or a synchronous parallel interface, which is communicatively coupleable to the interface carrying the digital baseband signal, and a Gigabit Media Independent Interface, GMII, series or a SERDES series interface, which is communicatively coupleable to the Ethernet PHY layer interface (8).

9. The interface apparatus according to Claim 8, wherein the GMII series interface comprises: a GMII, a Reduction GMII, RGMII, or a Reduction Ten Bit Interface, RTBI; and the SERDES series interface comprises a 1.25G SERDES interface.

10. The interface apparatus according to any one of Claims 1 to 9, wherein the Ethernet PHY layer interface (2, 8) is a hundred-megabit or a gigabit Ethernet PHY layer chip.

11. The interface apparatus according to any one of Claims 1 to 10, wherein the interface apparatus (25) is operative for a cascaded device for cascading the master base station with the RRU in a network.

12. An interface apparatus (4) for communications between a first communications apparatus and a second communications apparatus, said interface apparatus comprising:
an interface conversion module (1) in the interface apparatus (4), configured to receive a digital baseband signal from a Common Public Radio Interface, CPRI, carrying the digital baseband signal, convert the digital baseband signal into a signal conforming with a format of an Ethernet Physical, PHY, layer, and extract a reference clock from the digital baseband signal of the CPRI carrying the digital baseband signal;
an Ethernet PHY layer interface in the interface apparatus (4), configured to receive the converted digital baseband signal from the interface conversion module (1) and send the converted digital baseband signal to a peer end Ethernet PHY layer interface;
the clock module (3) in the interface apparatus (4), configured to receive the reference clock (7) from the interface conversion module (1), generate a working clock (133) and an external working clock (14), and provide the working clock (13) and the external working clock (14) for the interface conversion module (1) and the Ethernet PHY layer interface, respectively;
wherein the external, working clock is generated after a frequency division processing of the working clock; and
wherein the Ethernet PHY layer interface performs a frequency multiplication of the external working clock;
wherein the first communications apparatus is a master base station, the second communications apparatus is a Radio Remote Unit, RRU, or a cascaded device between the master base station and the RRV and wherein
the interface apparatus is set in the master base station.

13. The interface apparatus according to claim 12, wherein the Ethernet PHY layer interface (2) of the interface apparatus (4) of the first communications apparatus works in a master clock mode, the interface conversion module (1) of the interface apparatus(4) of the first communications apparatus restores the reference clock from the digital baseband signal of the CPRI carrying the digital baseband signal.

## Patentansprüche

1. Schnittstellenvorrichtung (25) zur Kommunikation zwischen einer ersten Kommunikationsvorrichtung und einer zweiten Kommunikationsvorrichtung, wobei die Schnittstellenvorrichtung Folgendes umfasst:
ein Schnittstellenumsetzungsmodul (21), das dafür ausgelegt ist, ein digitales Basisbandsignal aus einer Common Public Radio Interface CPRI (18), die das digitale Basisbandsignal führt, zu empfangen und das digitale Basisbandsignal in ein Signal umzusetzen, das mit einem Format einer Bitübertragungsschicht PHY des Ethernet konformiert;
eine Schnittstelle (8) der Ethernet-PHY-Schicht, die dafür ausgelegt ist, das umgesetzte digitale Basisbandsignal von dem Schnittstellenumsetzungsmodul (21) zu empfangen, das umgesetzte digitale Basisbandsignal zu einer Schnittstelle (2) der Ethernet-PHY-Schicht eines Peer-Endes zu senden, ein weiteres umgesetztes digitales Basisbandsignal von der Schnittstelle (2) der Ethernet-PHY-Schicht des Peer-Endes zu empfangen, ein Taktsignal aus dem weiteren umgesetzten digitalen Basisbandsignal zu extrahieren und das Taktsignal zu dem Schnittstellenumsetzungsmodul (21) zu senden;
wobei das Schnittstellenumsetzungsmodul (21) ferner dafür ausgelegt ist, das Taktsignal von der Schnittstelle (8) der Ethernet-PHY-Schicht zu empfangen und durch Teilen der Frequenz des Taktsignals einen Referenztakt (27) zu beschaffen;
ein Taktmodul (33), das dafür ausgelegt ist, den Referenztakt (27) von dem Schnittstellenumsetzungsmodul (21) zu empfangen, einen Arbeitstakt (23) und einen externen Arbeitstakt (24) zu erzeugen und den Arbeitstakt (23) und den externen Arbeitstakt (24) für das Schnittstellenumsetzungsmodul (21) bzw. die Schnittstelle (8) der Ethernet-PHY-Schicht bereitzustellen;
wobei der externe Arbeitstakt nach einer Prequenzteilungsverarbeitung des Arbeitstakts erzeugt wird; und
wobei die Schnittstelle der Ethernet-PHY-Schicht eine Frequenzvervielfachung des externen Arbeitstakts durchführt;
wobei die erste Kommunikationsvorrichtung eine Master-Basisstation und die zweite Kommunikationsvorrichtung eine Radio Remote Unit RRU oder eine kaskadierte Einrichtung zwischen der Master-Basisstation und der RRU ist; und wobei die Schnittstellenvorrichtung in der RRU oder der kaskadierten Einrichtung eingerichtet ist.

2. Schnittstellenvorrichtung nach Anspruch 1, wobei die erste Kommunikationsvorrichtung und die zweite Kommunikationsvorrichtung synchron arbeiten.

3. Schnittstellenvorrichtung nach Anspruch 1, wobei das Taktmodul (33) Folgendes umfasst:
einen Phasenregelkreis PLL (10), einen spannungsgesteuerten Kristalloszillator VCXO (11) und eine Frequenzteilungsschaltung (12);
eine durch den PLL (10) und den VCXO (11) gebildete verriegelte Schaltung, die wirkt, um den Referenztakt (7, 27) zu verarbeiten, um den Arbeitstakt (13, 32) wieder herzustellen und zu erzeugen; und wobei
der PLL (10) wirkt, um den Referenztakt (7, 27) zu empfangen und den erzeugten Arbeitstakt (13, 32) zu der Frequenzteilungsschaltung (12) sendet; und
die Frequenzteilungsschaltung (12) wirkt, um den externen Arbeitstakt (14, 24) zu erzeugen,

4. Schnittstellenvorrichtung nach Anspruch 1, wobei das Taktmodul (3, 33) Folgendes umfasst:
den PLL (10), einen spannungsgesteuerten Oszillator VCO und die Frequenzteilungsschaltung (12) ;
eine durch den PLL (10) und den VCO gebildete verriegelte Schaltung, die wirkt, um den Referenztakt (7, 27) zu verarbeiten, um den Arbeitstakt (13, 23) wieder herzustellen und zu erzeugen; und wobei
der PLL (10) wirkt, um den Referenztakt (7, 27) zu empfangen, und den erzeugten Arbeitstakt (13, 23) zu der Frequenzteilungsschaltung (12) sendet; und
die Frequenzteilungsschaltung (12) wirkt, um den externen Arbeitstakt (14, 24) zu erzeugen.

5. Schnittstellenvorrichtung nach Anspruch 3 oder 4, wobei
die Schnittstelle der Ethernet-PHY-Schicht einen Schnittstellenchip der Gigabit-Ethernet-PHY-Schicht umfasst;
die Frequenzumsetzung eine Acht-Frequenz-Teilung umfasst;
die Frequenzteilungsschaltung (12) eine Fünf Frequenz-Teilungsschaltung umfasst.

6. Schnittstellenvorrichtung nach einem der Ansprüche 1 bis 5, wobei die Schnittstellen (2, 8) der Ethernet-PHY-Schicht durch eine abgeschirmte oder eine unabgeschirmte verdrillte Doppelleitung verbunden werden.

7. Schnittstellenvorrichtung nach einem der Ansprüche 1 bis 6, wobei die Schnittstelle zum Führen des digitalen Basisbandsignals eine Hochgeschwindigkeitsschnittstelle oder andere benutzerdefinierte Schnittstellen umfasst.

8. Schnittstellenvorrichtung nach einem der Ansprüche 1 bis 7, wobei das Schnittstellenumsetzungsmodul (21) Folgendes umfasst:
eine serielle Hochgeschwindigkeits-SERDES-Schnittstelle oder eine synchrone parallele Schnittstelle, die kommunizierend mit der das digitale Basisbandsignal führenden Schnittstelle koppelbar ist, und eine Schnittstelle der Serie Gigabit Media Independent Interface GMII oder einer SERDES-Serie, die kommunizierend mit der Schnittstelle (8) der Ethernet-PHY-Schicht koppelbar ist.

9. Schnittstellenvorrichtung nach Anspruch 8, wobei die Schnittstelle der GMII-Serie Folgendes umfasst: eine Schnittstelle RTBI des Typs GMII, Reduction GMII bzw. RGMII oder Reduction Ten Bit; und die Schnittstelle, der SERDES-Serie eine 1.25 G-SERDES-Schnittstelle umfasst.

10. Schnittstellenvorrichtung nach einem der Ansprüche 1 bis 9, wobei die Schnittstelle (2, 8) der Ethernet-PHY-Schicht ein Hundert-Megabit- oder ein Gigabit-Chip der Ethernet-PHY-Schicht ist.

11. Schnittstellenvorrichtung nach einem der Ansprüche 1 bis 10, wobei die Schnittstellenvorrichtung (25) für eine kaskadierte Einrichtung wirkt, zur Kaskadierung der Master-Basisstation mit der RRU in einem Netzwerk.

12. Schnittstellenvorrichtung (4) zur Kommunikation zwischen einer ersten Kommunikationsvorrichtung und einer zweiten Kommunikationsvorrichtung, wobei die Schnittstellenvorrichtung Folgendes umfasst:
ein Schnittstellenumsetzungsmodul (1) in der Schnittstellenvorrichtung (4), das dafür ausgelegt ist, ein digitales Basisbandsignal aus einer Common Public Radio Interface CPRI, die das digitale Basisbandsignal führt, zu empfangen, das digitale Basisbandsignal in ein Signal umzusetzen, das mit einem Format einer Bitübertragungsschicht PHY des Ethernet konformiert, und einen Referenztakt aus dem digitalen Basisbandsignal der das digitale Basisbandsignal führenden CPRI zu extrahieren;
eine Schnittstelle der Ethernet-PHY-Schicht in der Schnittstellenvorrichtung (4), die dafür ausgelegt ist, das umgesetzte digitale Dasisbandsignal aus dem Schnittstellenumsetzungsmodul (1) zu empfangen und das umgesetzte digitale Basisbandsignal zu einer Schnittstelle der Ethernet-PHY-Schicht eines Peer-Endes zu senden;
wobei das Taktmodul (3) in der Schnittstellenvorrichtung (4) dafür ausgelegt ist, den Referenztakt (7) aus dem Schnittstellenumsetzungsmodul (1) zu empfangen, einen Arbeitstakt (13) und einen externen Arbeitstakt (14) zu erzeugen und den Arbeitstakt (13) und den externen Arbeitstakt (14) für das Schnittstellenumsetzungsmodul (1) bzw. die Schnittstelle der Ethernet-PHY-Schicht bereitzustellen;
wobei der externe Arbeitstakt nach einer Frequenzteilungsverarbeitung des Arbeitstakts erzeugt wird; und
wobei die Schnittstelle der Ethernet-PHY-Schicht eine Frequenzvervielfachung des externen Arbeitstakts durchführt;
wobei die erste Kommunikationsvorrichtung eine Master-Basisstation und die zweite Kommunikationsvorrichtung eine Radio Remote Unit RRU oder eine kaskadierte Einrichtung zwischen der Master-Basisstation und der RRU ist; und wobei die Schnittstellenvorrichtung in der Master-Basisstation eingerichtet ist.

13. Schnittstellenvorrichtung nach Anspruch 12, wobei die Schnittstelle (2) der Ethernet-PHY-Schicht der Schnittstellenvorrichtung (4) der ersten Kommunikationsvorrichtung in einem Master-Takt-Modus arbeitet, das Schnittstellenumsetzungsmodul (1) der Schnittstellenvorrichtung (4) der ersten Kommunikationsvorrichtung aus dem digitalen Basisbandsignal der das digitale Basisbandsignal führenden CPRI den Referenztakt wieder herstellt.

## Revendications

1. Dispositif d'interface (25) pour des communications entre un premier dispositif de communications et un second dispositif de communications, ledit dispositif d'interface comprenant :
un module de conversion d'interface (21), configuré pour recevoir un signal numérique en bande de base depuis une Interface Radio Publique Commune, CPRI (Common Public Radio Interface), (18) acheminant le signal numérique en bande de base et convertir le signal numérique en bande de base en un signal conforme à un format d'une couche physique Ethernet, PHY ;
une interface de couche PHY Ethernet (8), configurée pour recevoir le signal numérique en bande de base converti depuis le module de conversion d'interface (21), envoyer le signal numérique en bande de base converti à une interface de couche PHY Ethernet côté homologue (2), recevoir un autre signal numérique en bande de base converti depuis l'interface de couche PHY Ethernet côté homologue (2), extraire un signal d'horloge de l'autre signal numérique en bande de base converti et envoyer le signal d'horloge au modula de conversion d'interface (21) ;
dans lequel le module de conversion d'interface (21) est configuré en outre pour recevoir le signal d'horloge depuis l'interface de couche PHY Ethernet (8), et acquérir une horloge de référence (27) en divisant la fréquence du signal d'horloge ;
un module d'horloge (33), configuré pour recevoir l'horloge de référence (27) depuis le module de conversion d'interface (21), générer une horloge de travail (23) et une horloge de travail externe (24) et fournir l'horloge de travail (23) et l'horloge de travail externe (24) au module de conversion d'interface (21), et à l'interface de couche PHY Ethernet (8), respectivement ;
dans lequel l'horloge de travail externe est générée après un traitement de répartition en fréquence de l'horloge de travail ; et
dans lequel l'interface de couche PHY Ethernet exécute une multiplication de fréquence de l'horloge de travail externe ;
dans lequel le premier dispositif de communications est une station de base maître, le second dispositif de communications est une Unité Radio à Distance, RRU (Remote Radio Unit), ou un dispositif monté en cascade entre la station de base maître et la RRU;
et dans lequel le dispositif d'interface est placé dans la RRU ou dans le dispositif monté en cascade.

2. Dispositif d'interface selon la revendication 1, dans lequel ledit premier dispositif de communications et ledit second dispositif de communications travaillent de façon synchrone.

3. Dispositif d'interface selon la revendication 1, dans lequel le module d'horloge (33) comprend :
une Boucle Asservie en Phase, PLL (10), un Oscillateur à Quartz Commandé en Tension, VCXO (11), et un circuit de division de fréquence (12) ;
un circuit verrouillé constitué par la PLL (10) et le VCXO (11) fonctionnant pour traiter l'horloge de référence (7, 27) afin de restituer et de générer l'horloge de travail (13, 23) ; et dans lequel
la PLL (10) fonctionne pour recevoir l'horloge de référence (7, 27) et envoyer l'horloge de travail générée (13, 23) au circuit de division de fréquence (12) ; et
le circuit de division de fréquence (12) fonctionne pour générer l'horloge de travail externe (14, 24).

4. Dispositif d'interface selon la revendication 1, dans lequel le module d'horloge (3, 33) comprend :
la PLL (10), un Oscillateur Commandé en Tension, VCO, et le circuit de division de fréquence (12) ;
un circuit verrouillé constitué par la PLL (10) et le VCO fonctionnant pour traiter l'horloge de référence (7, 27) afin de restituer et de générer l'horloge de travail (13, 23) ; et dans lequel
la PLL (10) fonctionne pour recevoir l'horloge de référence (7, 27) et envoyer l'horloge de travail générée (13, 23) au circuit de division de fréquence (12) ; et
le circuit de division de fréquence (12) fonctionne pour générer l'horloge de travail externe (14, 24).

5. Dispositif d'interface selon la revendication 3 ou 4, dans lequel
l'interface de couche PHY Ethernet comprend une puce d'interface de couche PHY du Gigabit Ethernet ;
la conversion de fréquence comprend une division de huit fréquences ;
le circuit de division de fréquence (12) comprend un circuit de division de cinq fréquences.

6. Dispositif d'interface selon l'une quelconque des revendications 1 à 5, dans lequel les interfaces de couche PHY Ethernet (2, 8) sont connectées par une ligne à paire torsadée blindée ou non blindée.

7. Dispositif d'interface selon l'une quelconque des revendications 1 à 6, dans lequel l'interface pour acheminer le signal numérique en bande de base comprend une interface à haut débit ou d'autres interfaces définies par l'utilisateur.

8. Dispositif d'interface selon l'une quelconque des revendications 1 à 7, dans lequel le module de conversion d'interface (21) comprend :
une interface sérielle à haut débit SERDES, ou une interface parallèle synchrone, qui peut être couplée par communications à l'interface acheminant le signal numérique en bande de base, et une Interface Gigabit Indépendante du Support, GMII (Gigabit Media Independent Interface), ou une interface série ou une interface série SERDES, qui peut être couplée par communications à l'interface de couche PHY Ethernet (8).

9. Dispositif d'interface selon la revendication 8, dans lequel l'interface série GMII comprend : une GMII, une CrMII de réduction, RGMII, ou une Interface de Réduction à Dix Bits, RTBI ; et l'interface série SERDES comprend une interface SERDES 1,25 G.

10. Dispositif d'interface selon l'une quelconque des revendications 1 à 9, dans lequel l'interface de couche PHY Ethernet (2, 8) est une puce de couche PHY Ethernet, de centaines de mégabits ou gigabits.

11. Dispositif d'interface selon l'une quelconque des revendications 1 à 10, dans lequel le dispositif d'interface (25) fonctionne pour un dispositif monté en cascade pour monter en cascade la station de base maître avec la RRU dans un réseau.

12. Dispositif d'interface (4) destiné aux communications entre un premier dispositif de communications et un second dispositif de communications, ledit dispositif d'interface comprenant ;
un module de conversion d'interface (21) dans le dispositif d'interface (4), configuré pour recevoir un signal numérique en bande de base depuis une Interface Radio Publique Commune, CPRI, acheminant le signal numérique en bande de base, convertir le signal numérique en bande de base en un signal conforme à un format d'une couche Physique Ethernet, PHY, et extraire une horloge de référence du signal numérique en bande de base de la CPRI acheminant le signal numérique en bande de hase ;
une interface de couche PHY Ethernet dans le dispositif d'interface (4), configurée pour recevoir le signal numérique en bande de base converti depuis le module de conversion d'interface (1) et envoyer le signal numérique en bande de base converti à une interface de couche PHY Ethernet côté homologue ;
le module d'horloge (3) dans le dispositif d'interface (4), configuré pour recevoir l'horloge de référence (27) depuis le module de conversion d'interface (1), générer une horloge de travail (13) et une horloge de travail externe (14), et fournir l'horloge de travail (13) et l'horloge de travail externe (14) au module de conversion d'interface (1); et à l'interface de couche PHY Ethernet, respectivement ;
dans lequel l'horloge de travail externe est générée après un traitement de répartition en fréquence de l'horloge de travail ; et
dans lequel l'interface de couche PHY Ethernet exécute une multiplication de fréquence de l'horloge de travail externe ;
dans lequel le premier dispositif de communications est une station de base maître, le second dispositif de communications est une Unité Radio à Distance, RRU, ou un dispositif monté en cascade entre la station de base maître et la RRU
et dans lequel le dispositif d'interface est placé dans la station de base maître.

13. Dispositif d'interface selon la revendication 12, dans lequel l'interface de couche PHY Ethernet (2) du dispositif d'interface (4) du premier dispositif de communications fonctionne dans un mode d'horloge maître, le module de conversion d'interface (1) du dispositif d'interface (4) du premier dispositif de communications restitue l'horloge de référence à partir du signal numérique en bande de base de la CPRI qui achemine le signal numérique en bande de base.
